# EUROPEAN PATENT APPLICATION

(11) **EP 3 297 085 A1**
(43) Date of publication of application: **21.03.2018**
(21) Application number: 16188711.2
(22) Date of filing: 14.09.2016
(51) Int. Cl.: H01M 10/0525, H01M 10/056, H01M 4/134

(54) **ELECTRODE ASSEMBLY FOR A BATTERY CELL AND BATTERY CELL**

(71) Applicant: Lithium Energy and Power GmbH & Co. KG, 70469 Stuttgart (DE)
(72) Inventor: Wurm, Calin Iulius, 86405 Meitingen (DE); Hiller, Martin Manuel, 70469 Stuttgart (DE)
(74) Representative: Bee, Joachim

(57) **Abstract**

The invention concerns an electrode assembly (10) for a battery cell, comprising an anode (11) and a cathode (12) that are separated from one another by means of a separator (18). The separator (18) comprises at least a first layer (31) which contains a polymer electrolyte and a second layer (32) which contains a solid state electrolyte. The second layer (32) further contains a binder which is mixed with the solid state electrolyte. The invention also relates to a battery cell that comprises at least one electrode assembly (10) according to the invention.

## Description

The invention relates to an electrode assembly for a battery cell, comprising an anode and a cathode that are separated from one another by means of a separator, whereat the separator comprises at least a first layer and a second layer. The invention also relates to a battery cell that comprises at least one electrode assembly according to the invention.

### State of the Art

Electrical energy can be stored by means of batteries. Batteries change chemical energy into electrical energy. Particularly, rechargeable batteries are known that can be charged and discharged several times. Batteries or battery systems comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

Electrode assemblies have a positive electrode called cathode and a negative electrode called anode. The anode and the cathode are separated from one another by means of a separator. The electrodes of the battery cell are formed like foils and are wound with interposition of the separator to form an electrode roll, also referred to as jelly-roll. Alternatively, the electrodes can be layered to form an electrode stack.

The electrodes and the separator are impregnated by an electrolyte that is normally in liquid state or in solid state. The electrodes of the electrode assemblies are connected to terminals of the battery cell. The battery cell can be charged and discharged by means of the terminals.

The cathode and the anode each comprise a current collector on which an active material is applied. The current collector of the cathode is typically made of aluminium and the current collector of the anode is typically made of copper. The active material for the cathode is, for example, a lithium metal oxide. The active material for the anode is, for example, graphite, silicon or metallic lithium. In the active material of the cathode lithium ions are intercalated. In the graphite lithium ions are also intercalated, with silicon are alloying and on metallic lithium are plating.

In a charging process of the battery cell, the lithium ions are migrating from the cathode through the electrolyte towards the anode. Thereby, the lithium ions are stored into the active material of the anode reversibly. Simultaneously, electrons flow in an external circuit from the cathode to the anode. In a discharging process, electrons flow in an external circuit from the anode to the cathode, and lithium ions move within the battery cell from the anode to the cathode.

Document US 2015/0044517 A1 discloses an electrochemical cell that comprises an electrode with an active material and an electrolyte. A protective structure is positioned between the active material and the electrolyte. The protective structure comprises an ion-conductive layer which contains a ceramic material or a polymeric material.

Document US 2009/0297935 A1 discloses a battery cell with a separator which contains a membrane arranged next to an electrolyte. The battery may further comprise a lithium metal anode. The membrane is ionically conductive and chemically compatible with the active material of the anode.

Document US 2015/0017547 A1 discloses an electrochemical device with an electrolyte, whereat the electrolyte is a block copolymer which comprises a thermoplastic polymer and a siloxane-based polymer. The polymer electrolyte material has high ionic conductivity and is mechanically robust.

### Disclosure of the Invention

The invention refers to an electrode assembly for a battery cell, comprising an anode and a cathode that are separated from one another by means of a separator which is ion conductive. The separator comprises at least a first layer which contains a polymer electrolyte and a second layer which contains a solid state electrolyte.

According to the invention, said second layer of the separator of the electrode assembly further contains a binder whereat the binder is mixed with the solid state electrolyte. The binder has to be stable in the operating potential windows of the cathode. Mostly used are the PVd F (Polyvinylidene fluoride)-based binders.

According to a preferred embodiment of the invention, the first layer of the separator which contains the polymer electrolyte faces the anode of the electrode assembly, and the second layer of the separator which contains the solid state electrolyte faces the cathode of the electrode assembly. In particular, the first layer of the separator faces an anode active material and the second layer of the separator faces a composite electrode of the cathode.

According to an advantageous embodiment of the invention, the cathode of the electrode assembly comprises a composite electrode which contains a cathode active material, a binder and/or a solid state electrolyte. The cathode active material may contain Li₁Ni₈Co₁Mn₁O₂, LiNCA (LiNi_{1-x-y}CoₓAl_{y}O₂ with 0 < x ≤ 0.5 and 0 < y ≤ 0.1) or LiNCM (LiNi_{1-x-y}CoₓMn_{y}O₂ with 0 < x ≤ 0.5 und 0 < y ≤ 0.5). The solid state electrolyte of the composite electrode may contain, for example, one or more of the following:
LLTO (Lithium Lanthanum Titanate) with Perovskite structure,
NASICON (sodium (Na) Super Ionic CONductor,),
LISICON (Lithium Super Ionic CONductor),
Thio-LISICON, (sulfide-based LISICON), any of a class of silicate mineral including Garnet,
Li conductor/mesoporous oxides composite,
Sulfide glass,
LiPON (Lithium phosphorous oxy-nitride),
Argyrodite (Ag8GeS6).

Thereat, the second layer of the separator may contain the same material of the binder as the composite electrode. However, the second layer of the separator may also contain a different material of the binder than the composite electrode.

According to a further advantageous embodiment of the invention, the anode of the electrode assembly comprises an anode active material which contains metallic lithium or lithium alloys (e.g. LiₓAl_{y}, LiₓSn_{y}, LiₓSi_{y} with x = 0-30 and y = 0-10). Hence, the first layer of the separator which contains the solid state electrolyte faces the metallic lithium.

Preferably, the polymer electrolyte of the first layer of the separator contains one or more of the following:
PEO (polyethylene oxide),
a mixture of PEO with PVdF (Polyvinylidene fluoride), DryLyte (TM for SEEO Electrolyte).

DryLyte is a block copolymer solid electrolyte with alternating hard domains and conductive domains. The material for the hard domains is selected from the group consisting of polysiloxanes, polyphosphazines, polyethers, polydienes, polyolefins, polyacrylates, polymethacrylates and combinations thereof. The conductive domains are ionically conductive. The material for the conductive domains is selected from the group consisting of polyethers, polyamines, polyimides, polyamides, alkyl carbonates, polynitriles, polysiloxanes, polyphosphazines, polyolefins, polydienes and combinations thereof.

Further preferably, the solid state electrolyte of the second layer of the separator contains one or more of the following:
LLTO (Lithium Lanthanum Titanate) with Perovskite structure,
NASICON (sodium (Na) Super Ionic CONductor,),
LISICON (Lithium Super Ionic CONductor),
Thio-LISICON, (sulfide-based LISICON),
any of a class of silicate mineral including Garnet,
Li conductor/mesoporous oxides composite,
Sulfide glass,
LiPON (Lithium phosphorous oxy-nitride),
Argyrodite (Ag8GeS6),
LAGP (lithium aluminium germanium phosphates).

Thereat, the second layer of the separator may contain the same material of the solid state electrolyte as the composite electrode. However, the second layer of the separator may contain a different material of the solid state electrolyte than the composite electrode.

According to an advantageous further development of the invention, an electrically conductive porous layer is arranged between the first layer of the separator and the second layer of the separator. Said electrically conductive porous layer can be used for short circuit detection or as a reference electrode.

Preferably, said electrically conductive porous layer which is arranged between the first layer and the second layer of the separator contains aluminium, titan, CNT (carbon nano tubes) and/or conductive carbon.

Furthermore, a battery cell is proposed that comprises at least one electrode assembly according to the invention.

A battery cell according to the invention is usable advantageously in particular in an electric vehicle (EV), in a hybrid electric vehicle (HEV) or in a plug-in hybrid vehicle (PHEV).

### Advantages of the Invention

The separator of the electrode assembly is electrochemically and mechanically stable in contact with metallic lithium which is contained in the anode active material. In particular, the separator is compatible to the anode active material which is made of metallic lithium or lithium alloys (e.g. LiₓAl_{y}, LiₓSn_{y}, LiₓSi_{y} with x = 0-30 and y = 0-10). Furthermore, the separator shows high lithium conductivity. Also, the separator is stable at relatively high voltages up to 4.5 Volts. The separator further avoids effectively the growth of lithium dendrites. Furthermore, the separator adds flexibility to the electrode assembly during the charge and discharge process of the cell. During this process lithium is dissolved or plated at the anode and thus mechanical stress appears which generates a need for mechanical flexibility of the cell.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view at a battery cell and
- Figure 2: a schematic view at the electrode assembly shown in figure 1.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

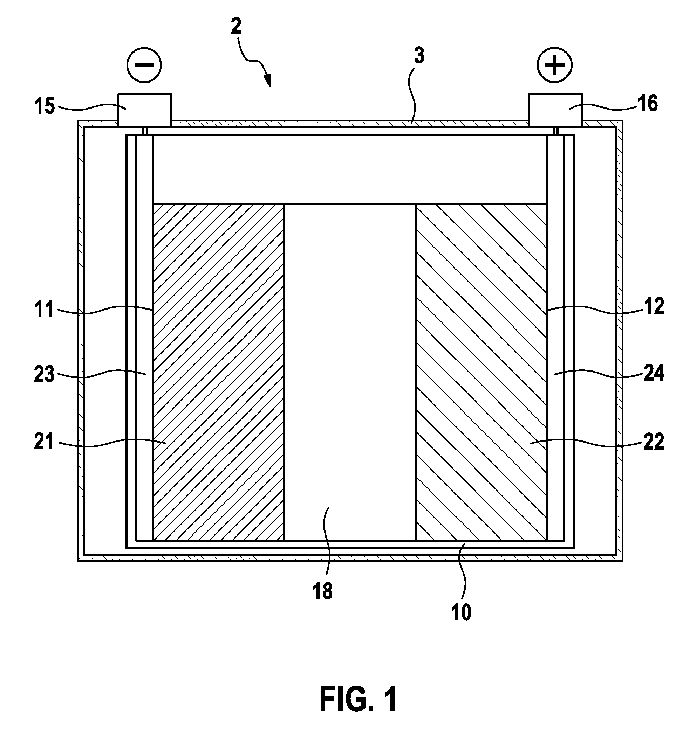

Figure 1 shows a schematic view at a battery cell 2. The battery cell 2 contains a housing 3 which has, for example, a prismatic or a cylindrical shape. The battery cell 2 further contains an electrode assembly 10, which is arranged within the housing 3.

The electrode assembly 10 contains an anode 11, a cathode 12 and a separator 18 that is arranged between the anode 11 and the cathode 12. Furthermore, the battery cell 2 contains a negative terminal 15 and a positive terminal 16. The terminals 15, 16 serve for charging and discharging the battery cell 2 and are mounted on the housing 3.

Presently, the electrode assembly 10 is shaped as a jelly roll. That means the anode 11 and the cathode 12 of the electrode assembly 10 are flat foils that are wound about an axis. The separator 18 that is also a flat foil is wound between the anode 11 and the cathode 12 about the same axis.

The battery cell 2 can also be of pouch type, for example. That means the anode 11 and the cathode 12 of the electrode assembly 10 consist of several flat foils that are stacked alternately to form a pile or a stack. The separator 18 also consists of several flat foils that are stacked between the foils of the anode 11 and the foils of the cathode 12. A bag or a pouch made of an electrically insulating material surrounds the electrode assembly 10 such that the electrode assembly 10 is electrically insulated.

The anode 11 contains an anode active material 21 formed as a flat foil and an anode current collector 23 formed as a flat foil. The anode active material 21 and the anode current collector 23 are attached to one another. The anode current collector 23 is electrically conductive and is made of a metal, in particular of copper. The anode current collector 23 is electrically connected to the negative terminal 15 of the battery cell 2. For example, the anode current collector 23 can also be a copper grid.

The cathode 12 contains a composite electrode 22 formed as a flat foil and a cathode current collector 24 formed as a flat foil. The composite electrode 22 and the cathode current collector 24 are attached to one another. The cathode current collector 24 is electrically conductive and is made of a metal, in particular of aluminium. The cathode current collector 24 is electrically connected to the positive terminal 16 of the battery cell 2.

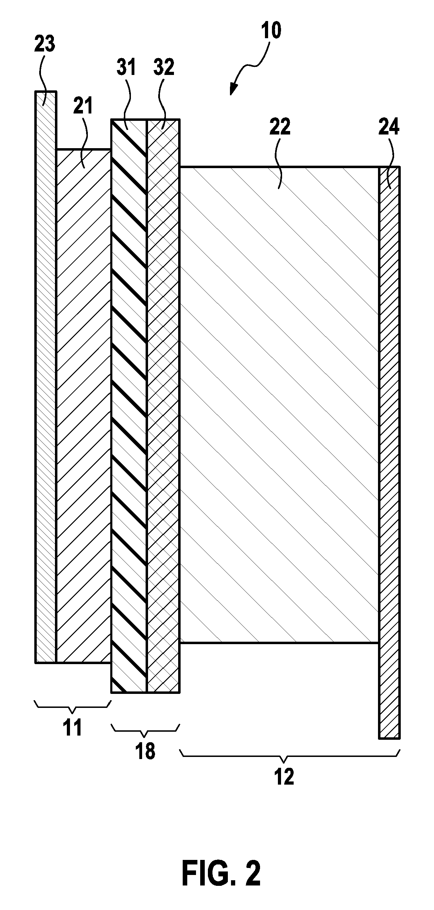

Figure 2 shows a schematic view at the electrode assembly 10 of the battery cell 2 that is shown in figure 1. Thereat, the anode active material 21 contains or consists of metallic lithium or a lithium alloy.

The separator 18 comprises a first layer 31 and a second layer 32. The first layer 31 of the separator 18 faces the anode 11 and the second layer 32 of the separator 18 faces the cathode 12. The separator 18 is arranged between the anode active material 21 and the composite electrode 22. Hence, the first layer 31 of the separator 18 is arranged next to the anode active material 21 and the second layer 32 of the separator 18 is arranged next to the composite electrode 22.

The first layer 31 of the separator 18 contains a polymer electrolyte. The polymer electrolyte of the first layer 31 of the separator 18 contains PEO, a mixture of PEO with PVdF, and/or DryLyte. Thus, the first layer 31 of the separator 18 containing the polymer electrolyte is arranged next to the anode active material 21 containing metallic lithium.

The polymer electrolyte of the first layer 31 of the separator 18 may also contain polyacrylonitrile (PAN), polymethyl methacrylate (PMMA), polypropylene oxide (PPO), polyvinylchloride (PVC), polyvinylidene fluoride-hexafluoro propylene (PVdF-HFP) and/or polyvinylidene fluoride-hexafluoro propylene / polyvinyl acetate (PvDF-HFP/PVAc).

The second layer 32 of the separator 18 contains a solid state electrolyte. The second layer 32 of the separator 18 also contains a binder. Thereat, the solid state electrolyte is mixed with the binder. The solid state electrolyte of the second layer 32 of the separator 18 contains LLTO (Perovskite), NASICON, LISICON, Thio-LISICON, Garnet, Li conductor/mesoporous oxides composite, Sulfide glass, LiPON, Argyrodites, and/or LAGP (lithium aluminium germanium phosphates).

The composite electrode 22 also contains a binder. The composite electrode 22 further contains a solid state electrolyte. Thereat, the solid state electrolyte is mixed with the binder. The solid state electrolyte of the composite electrode 22 may contain LLTO (Perovskite), NASICON, LISICON, Thio-LISICON, Garnet, Li conductor/mesoporous oxides composite, Sulfide glass, LiPON and/or Argyrodite. The composite electrode 22 further contains a cathode active material. The cathode active material may contain Li₁Ni₈Co₁Mn₁O₂, LiNCA (LiNi_{1-x-y}CoₓAl_{y}O₂ with 0 < x ≤ 0.5 and 0 < y ≤ 0.1) or LiNCM (LiNi_{1-x-y}CoₓMn_{y}O₂ with 0 < x ≤ 0.5 und 0 < y ≤ 0.5).

The second layer 32 of the separator 18 may contain the same material of the binder as the composite electrode 22. Also, the second layer 32 of the separator 18 may contain the same material of the solid state electrolyte as the composite electrode 22. However, the second layer 32 of the separator 18 and the composite electrode 22 may contain different materials of the solid state electrolyte and of the binder.

Optionally, and not shown in the figures, an electrically conductive layer can be arranged between the first layer 31 of the separator 18 and the second layer 32 of the separator 18. Thereat, the conductive layer arranged between the first layer 31 and the second layer 32 of the separator 18 is metallic and contains aluminium. Alternatively, the conductive layer can is metallic and may contain titan. Furthermore, the conductive layer may contain CNT (carbon nano tubes) and/or conductive carbon. Said electrically conductive layer is porous and hence is ion conductive. The electrically conductive layer can be used for example for short circuit detection or as a reference electrode arranged within the electrode assembly 10.

Furthermore, an adherence layer can be applied between the first layer 31 of the separator 18 and the second layer 32 of the separator 18. Said adherence layer is also porous and hence is ion conductive.

Also, an additional protection layer can be arranged between the separator 18 and the anode 11. In detail, the additional protection layer can be arranged between the anode active material 21 and the first layer 31 of the separator 18. Said additional protection layer further prevents dendrite formation and dendrite growth from the anode active material 21.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Electrode assembly (10) for a battery cell (2),
comprising an anode (11) and a cathode (12) that are separated from one another by means of a separator (18), the separator (18) comprising at least
a first layer (31) which contains a polymer electrolyte and
a second layer (32) which contains a solid state electrolyte, **characterised in that**
the second layer (32) further contains a binder which is mixed with the solid state electrolyte.

2. Electrode assembly (10) according to claim 1, **characterised in that** the first layer (31) faces the anode (11) and
the second layer (32) faces the cathode (12).

3. Electrode assembly (10) according to one of the preceding claims, **characterised in that**
the cathode (12) comprises a composite electrode (22) which contains a cathode active material, a binder and/or a solid state electrolyte.

4. Electrode assembly (10) according to one of the preceding claims, **characterised in that**
the anode (11) comprises an anode active material (21) which contains metallic lithium or lithium alloys.

5. Electrode assembly (10) according to one of the preceding claims, **characterised in that**
the polymer electrolyte of the first layer (31) contains PEO, a mixture of PEO with PVdF, and/or DryLyte.

6. Electrode assembly (10) according to one of the preceding claims, **characterised in that**
the solid state electrolyte of the second layer (32) contains LLTO (Perovskite), NASICON, LISICON, Thio-LISICON, Garnet, Li conductor/mesoporous oxides composite, Sulfide glass, LiPON, Argyrodites, and/or LAGP.

7. Electrode assembly (10) according to one of the preceding claims, **characterised in that**
a conductive porous layer is arranged between the first layer (31) and the second layer (32).

8. Electrode assembly (10) according to claim 7, **characterised in that** the conductive porous layer contains aluminium, titan, CNT and/or conductive carbon.

9. Battery cell (2), comprising at least one electrode assembly (10) according to one of the preceding claims.

10. Usage of a battery cell (2) according to claim 9,
in an electric vehicle (EV), in a hybrid electric vehicle (HEV), in a plug-in hybrid vehicle (PHEV) or stationary.
